# EUROPEAN PATENT APPLICATION

(11) **EP 2 560 087 A2**
(43) Date of publication of application: **20.02.2013**
(21) Application number: 12180681.4
(22) Date of filing: 16.08.2012
(51) Int. Cl.: G06F 3/048

(54) **Method and terminal for executing application using touchscreen**

(30) Priority: 16.08.2011 KR 20110081095
(71) Applicant: Samsung Electronics Co., Ltd., Suwon-si, Gyeonggi-do, 443-742 (KR)
(72) Inventor: Lee, Junghyuck, 443-742 Gyeonggi-do (KR)
(74) Representative: de Boer, Henricus J.R.

(57) **Abstract**

A method and a terminal for executing applications intuitively using a touchscreen are provided. The terminal includes a display panel for displaying an icon corresponding to an application, a touch panel for generating a multi-touch event and/or a pinch gesture event detected at at least two separate positions of the icon, a control unit for, when the multi-touch event and/or the pinch gesture event in response to the multi-touch event are detected at the touch panel: adjusting a size of a preview image of the application corresponding to the icon and controlling the display panel to display the size-adjusted preview image, or adjusting a size of an execution screen of the application corresponding to the icon and controlling the display panel to display the size-adjusted execution screen.

## Description

### BACKGROUND OF THE INVENTION

### 1. Field of the Invention:

The present invention relates to a touchscreen-enabled terminal. More particularly, the present invention relates to a touchscreen-enabled method and terminal for executing applications intuitively using the touchscreen.

### 2. Description of the Related Art:

Recently mobile terminals include various input mechanisms, and in order to facilitate user input, the recent mobile terminals are equipped with a touchscreen in addition to a button-type keypad. The touchscreen may include a display panel for displaying application icons and a touch panel for detecting a touch made by the user and for generating an input signal corresponding to the touch. Accordingly, the user may select an icon displayed on the display panel by executing a touch at the position of the icon on the touch panel in order to execute a function corresponding to the icon.

More recently, with the advancement of semiconductor and information communication technologies, mobile terminals may integrate various features and enable the user to download and install applications. Such mobile terminals provide users with intuitive control of various functions with the touchscreen. Furthermore, such mobile terminals support multitasking, such that the user may execute multiple applications simultaneously.

However, such advances in mobile terminals may cause user inconvenience and may overload the terminal. The user may experience difficulty in using a plurality of functions provided by the terminal. For example, installation of a large number of applications may make it difficult for the user to remember all of the installed applications. Especially when the icons representing the installed applications lack intuitiveness, the user inconvenience increases. Accordingly, it may be difficult to determine the applications running on the terminal, resulting in application management inefficiency.

As the functionalities of the mobile terminals increase exponentially, the number of functions to be executed simultaneously in multitasking mode may also increase, which may result in an overload of the terminal. For example, if too many applications are executed simultaneously, the processing speed of the mobile terminals may slow down, and the battery may rapidly deplete as well.
Accordingly, there is therefore a need of a method for facilitating operations of the functions provided by a mobile terminal while reducing multitasking overload.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address the above-mentioned problems and/or disadvantages and to provide at least the advantages described below. Accordingly, an aspect of the present invention is to provide a touchscreen-enabled terminal and method for executing applications using the touchscreen that is capable of facilitating execution of various applications.

Another aspect of the present invention is to provide a touchscreen-enabled terminal and method for executing applications using the touchscreen that is capable of intuitively indicating the functions of the applications running on the terminal.

Another aspect of the present invention is to provide a touchscreen-enabled terminal and method for executing applications using the touchscreen that is capable of managing executions of applications efficiently.

Another aspect of the present invention is to provide a touchscreen-enabled terminal and method for executing applications using the touchscreen that is capable of facilitating intuitiveness of the functions of the applications running on the terminal, switching among the applications, and utilization of the touchscreen.

Another aspect of the present invention is to provide a touchscreen-enabled terminal and method for executing applications that is capable of reducing an overloading of processing and/or computing resources of the terminal.

In accordance with an aspect of the present invention, a method comprises displaying an icon corresponding to an application, detecting a multi-touch event at at least two separate positions of the icon, and when a pinch gesture event is detected in response to the multi-touch event: - adjusting a size of a preview image of the application corresponding to the icon and displaying the size-adjusted preview image, or - adjusting a size of an execution screen of the application corresponding to the icon, displaying the size-adjusted execution screen. In accordance with another aspect of the present invention, a terminal comprises a display panel for displaying an icon corresponding to an application, a touch panel for generating a multi-touch event and/or a pinch gesture event detected at at least two separate positions of the icon, and a control unit for, when the multi-touch event and/or the pinch gesture event in response to the multi-touch event are detected at the touch panel: - adjusting a size of a preview image of the application corresponding to the icon and controlling the display panel to display the size-adjusted preview image, or - adjusting a size of an execution screen of the application corresponding to the icon and controlling the display panel to display the size-adjusted execution screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a terminal according to an exemplary embodiment of the present invention;

FIG. 2 is a block diagram illustrating a configuration of a control unit, for example the control unit of FIG. 1, according to an exemplary embodiment of the present invention;

FIG. 3 is a flowchart illustrating an application execution method of a touchscreen-enabled terminal according to an exemplary embodiment of the present invention;

FIGs. 4A to 4D are diagrams illustrating exemplary screen images displayed in an application execution method according to an exemplary embodiment of the present invention;

FIG. 5 is a flowchart illustrating an application execution method of a touchscreen-enabled terminal according to an exemplary embodiment of the present invention; and

FIGs. 6A to 6E are diagrams illustrating exemplary screen images displayed in an application execution method according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, the term "touch" may refer to a user's gesture making a contact on a surface of a touch panel of a terminal or a mobile terminal using a touch object, such as a user's finger, a stylus, or any other suitable touch object. The term "multi-touch" may refer to a user's gesture simultaneously making two or more contacts on the surface of the touch panel using the touch object or touch objects. The term "multi-touch distance" may refer to a distance between two contact points of a multi-touch. The term "pinch" may refer to a user's gesture narrowing or widening the multi-touch distance by moving the touch object or touch objects such that the contact points approach or move away from each other.

The term "application" may refer to a software program that may be installed in the terminal to provide a specific function. Particularly, an application may be installed at a manufacturing stage by a manufacturer or may be downloaded and installed by the user. The term "icon" may refer to an image related to an app and symbolically and/or graphically representing the application. For example, an icon having a symbolic map image is linked to a map application. If a touch is made at or near a position where an icon is disposed on the touch panel, the application represented by the icon is executed.

The term "execution screen" may refer to an image displayed on the display panel as a result of the execution of an application. The execution screen may be changed while the executed application is running. The execution screen may be presented with or as a series of screen images. An initial execution screen of an application may be the execution screen of the application with which the application has been recently terminated. The term "preview image" may refer to an execution screen image captured at a specific time point. In exemplary embodiments of the present invention, the terminal and/or the mobile terminal may be any of touchscreen-enabled devices including cellular phones, smartphones, and other similar portable communication devices, tablet Personal Computers (PCs), electronic appliances, such as navigation devices, televisions, refrigerators, laundry machines, and any other similar and/or suitable electronic device that may be equipped with a touchscreen. For convenience in explanation, the description is directed to a touchscreen-enabled smartphone hereinafter.

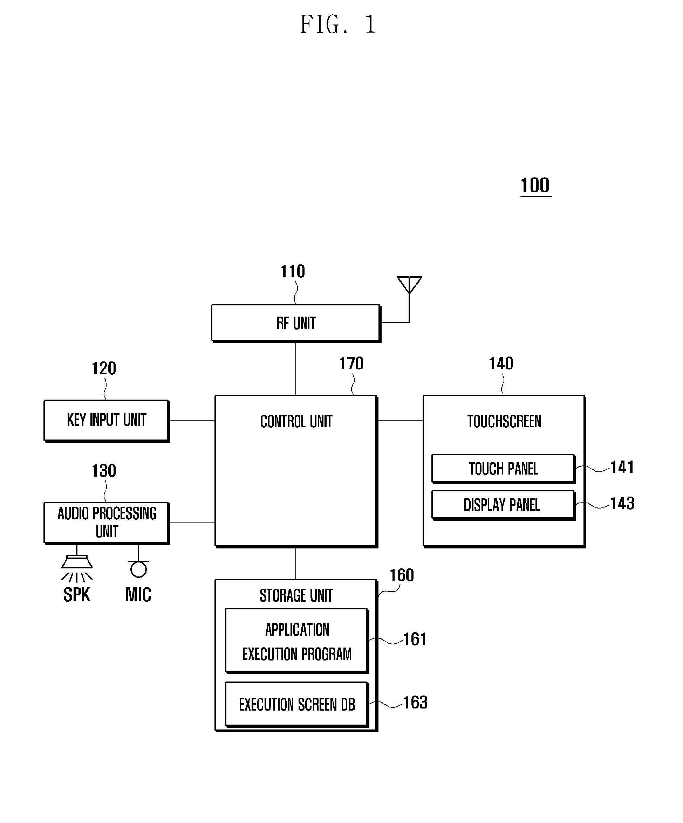

FIG. 1 is a block diagram illustrating a configuration of a terminal according to an exemplary embodiment of the present invention.

Referring to FIG. 1, the terminal 100 includes a Radio Frequency (RF) unit 110, a key input unit 120, an audio processing unit 130, a touchscreen 140, a storage unit 160, and a control unit 170.

Upon detection of a multi-touch and/or a pinch gesture on the icon displayed on the touchscreen 140, then the terminal 100 controls execution of the application represented by or corresponding to the icon by displaying the corresponding execution screen. This enables the user to acquire the application information intuitively. The terminal 100 also may control adjusting the size of the execution screen so as to display multiple execution screens on the touchscreen. Accordingly, the user may manage the applications executed in multi-tasking mode efficiently. With the efficient management of the applications operating in the multi-tasking mode, it is possible to reduce the load of the terminal 100. Hereinafter, detection of the multi-touch and pinch gesture occurring in sequence would be used as a main embodiment.

The RF unit 110 establishes radio channels for voice and video communications and also establishes a data communication channel for video and message data under the control of the control unit 170. The RF unit 110 may establish the data communication channel in response a specific key input or a touch event occurring on the onscreen key map. Particularly, the RF unit 110 may support downloading of applications for installation in the terminal 100 through the data communication channel. The RF unit 110 may also communicate data associated, generated, and/or used with the execution of a certain application.

The key input unit 120 includes a plurality of alphanumeric and function keys for supporting input of alphabetic characters, numeric information and configuration of various functions. The function keys may include navigation keys, side keys, and shortcut keys designated for certain functions. The key input unit 120 generates a key signal that is provided to the control unit 170 in response to a user input. In a case where the touchscreen 140 is implemented in the form of full touchscreen, the key input unit 120 may include only the side keys. Particularly, the key input unit 120 may generate a mode configuration signal for configuring an execution screen display mode for displaying an execution screen and a preview image display mode for displaying a preview image obtained by capturing the execution screen, and the mode configuration signal may be provided to the control unit 170. The control unit 170 may control displaying of the execution screen or the preview image in response to the touch event detected at a position corresponding to a certain icon presented on the screen. The key input unit 120 may also generate an execution command that is provided to the control unit 170 for controlling application execution via the presentation of an execution screen while a preview image is displayed.

The audio processing unit 130 includes a Speaker SPK for playing the audio data, which may be received in voice communication, included in a received message, or stored in the storage unit 160, and a Microphone MIC for collecting an audio signal including voice and/or sound during voice communication. The audio processing unit 130 may output a sound effect corresponding to at least one touch event, such as multi-touch and pinch gestures occurring on the touch panel 141, in series. The audio processing unit 130 may also output a sound effect corresponding to displaying an execution screen or a preview image. The output of the sound effects may be disabled by user configuration or any other suitable configuration change.

The touchscreen includes a touch panel 141 and a display panel 143. The touch screen 140 may be formed by disposing the touch panel 141 on a front surface of the display panel 143. A size of the touchscreen may be determined by a size of the touch panel 141.

The touch panel 141 may be disposed at one of a top area and a bottom area, or any other suitable location, of the display panel 143 and may include a sensor, such as a touch sensor, aligned in the form of a matrix. The touch panel 141 generates a touch event that is provided to the control unit 170 via a signal in accordance with the contact of a touch object, and the signal may include information on a distance between contact points on the touch panel. Particularly, according to an exemplary embodiment of the present invention, the touch panel 141 generates a touch event for executing an application. The touch event 141 includes information on a position or location at which the touch occurred and a type of the touch. The type of the touch may include a multi-touch having at least two separate contact points, a pinch action narrowing a distance between two contact points, a drag, a tap, and any other suitable type of touch. Here, since the pinch is a touch gesture occurring for a certain duration, the position information of the pinch may include information on initial contact points and final release points of the pinch or may include all of the points along a trace from the initial contact points up to the final release points. The control unit 170 may calculate the distance between the contact points of a multi-touch and an acceleration of the pinch gesture, which may be referred to as a pinch acceleration.

The touch panel 141 may generate a touch event corresponding to a series of touch gestures or may generate a touch event per touch gesture. For example, if a multi-touch gesture and a pinch gesture occur on the touch panel 141 in sequence, then the touch panel 141 may generate an integrated touch event representing a series of the touch gestures or touch events corresponding to the respective touch gestures. For convenience in explanation, the description given herein is directed to a case where the touch panel 141 generates touch events corresponding to individual touch gestures.

The display panel 143 displays information entered by and provided to the user, as well as various menus of the terminal 100. For example, the display panel 143 may display various screens related to the operation of the terminal 100, such as an idle mode screen having a plurality of icons arranged thereon, application-specific execution screens, a preview image of an execution screen, or any other suitable screen. The display panel 143 may be any of a Liquid Crystal Display (LCD), an Organic Light Emitting Diode (OLED), or any other suitable display type. The display panel 143 may be arranged at a top area, a bottom area, or any other suitable location of the touch panel 141.

Particularly, the display panel 143 may display the execution screen and the preview image according to predetermined conditions under the control of the control unit 170. The conditions may include a multi-touch distance, pinch acceleration, and an aspect ratio of the display panel 143, or any other suitable and/or similar condition. The display panel 143 may simultaneously display a plurality of execution screens and preview images under the control of the control unit 170. The display panel 143 may display multiple execution screens in regular-sized cells of a grid. For example, the display panel 143 may divide the screen into two parts, horizontally or vertically, to display two different execution screens.

The storage unit 160 stores at least one application program supporting the functions described herein, and may also store user data generated by the user, messages exchanged with a communication network, and application data generated by application programs, as well as any other data that may be stored on the storage unit 160. The storage unit 160 may include a program region and a data region.

The program region may store an Operating System (OS) that may be executed at a booting up of the terminal 100 and that may operate the aforementioned components and applications downloaded and stored on the terminal 100. Particularly, the program region may store the application execution program 161. The application execution program 161 includes routines for executing an application and for displaying a corresponding execution screen when a multi-touch and pinch occur in sequence.

The application execution program 161 may include a touch sensing routine for sensing the multi-touch and pinch occurring in sequence, an application execution routine for executing the application represented by the icon and for displaying the execution screen, and an execution screen size adjustment routine for adjusting the execution screen to a predetermined size. The touch sensing routine may determine whether the multi-touch is detected at an edge of the icon. The touch sensing routine may be configured to detect touches for a predetermined amount of time following the occurrence of the multi-touch.

The application execution routine may execute the application such that the process of the application execution routine continues from the application's end point. For example, a map application may end right after determining navigation to Seoul, Korea, and the application execution routine may then execute the map application with the execution screen displaying the presentation of Seoul afterward. When displaying the execution screen initially, the application execution routine may change properties of the execution screen in order to notify the user of the switching from the icon to an execution screen. For example, the application execution routine may determine a size of the execution screen according to the touch event, may change the shape of the execution screen geometrically, or may give a visual effect such that the execution screen is highlighted or blinks.

The execution screen size adjustment routine may be configured to display the execution screen at a size proportional to the multi-touch distance. However, the present invention is not limited thereto, and the execution screen size adjustment routine may be programed to display the execution screen according to other methods and at any suitable size. For example, the execution screen size adjustment routine may be configured to display the execution screen having a size determined according to the pinch acceleration and an aspect ratio of the display panel 143.

The application execution program 161 may further include a preview image display routine for displaying a preview of the execution screen. The preview image display routine is programed to be executed before the application execution routine. The preview image display routine may control changing of the properties of the preview image in order to notify the user of the presentation of the preview image. For example, the preview image may be changed in size or shape or may be animated with a visual effect. In such a case, in which the preview image display routine is executed, the application execution routine may be configured to execute the application and display a corresponding execution screen when a predetermined application execution condition is fulfilled. The predetermined application execution condition may be any of the multi-touch distance, a pinch acceleration, a preview image size threshold, any other suitable and/or similar parameters, and a combination among these parameters.

The data region may store data generated during use of the terminal 100. Particularly, the data region may store the information used and generated during the execution of the application execution program 161. For example, the data region may store icons representing the installed applications, an icon map having information on the positions of the icons on the idle mode screen, and information generated and referenced during use of the applications. The data region may further store an execution screen Database (DB) 163. The execution screen DB 163 may store the execution screen images of the installed applications. The execution screen DB 163 is updated when a corresponding application is executed and terminated. The execution screen DB 163 may store the most recent application execution screen images. In a case where the execution screen image is used as the preview image, the terminal 100 may acquire the execution screen image without execution of the application. Accordingly, it is possible to reduce unnecessary terminal processing load caused by the execution of the application at an unintended time.

The control unit 170 controls overall operations of the terminal 100. Particularly, the control unit 170 may control the operations related to the management of application execution. For example, if at least one touch event for executing an application is detected, the control unit 170 controls execution of the corresponding application via the execution screen. The at least one touch event may be generated by a multi-touch and pinch gestures made to an icon. The control unit 170 may control displaying of the preview image of the execution screen before the execution of the corresponding application.

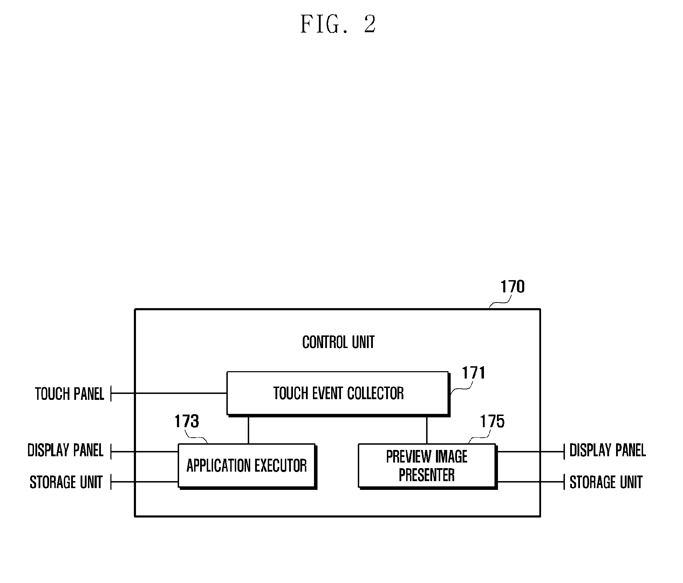

A description is made of the configuration of the control unit of the terminal with reference to FIG. 2.

FIG. 2 is a block diagram illustrating a configuration of a control unit, for example the control unit of FIG. 1, according to an exemplary embodiment of the present invention.

Referring to FIG. 2, the control unit 170 includes a touch event collector 171 and an application executor 173.

The touch event collector 171 collects the touch events generated on the touch panel 143. Particularly, the touch event collector 171 collects the touch events for executing an application. That is, the touch event collector 171 may collect a multi-touch event having two contact points targeting an icon and a pinch gesture event in sequence. The pinch gesture may be a gesture narrowing or widening a distance between two contact points. The touch event collector 171 sends the information on the two touch events to the application executor 174. As described above, information on the multi-touch event and the pinch gesture event may be provided to the application executor 174 as an integrated touch event. For convenience in explanation, it is assumed that the information on the multi-touch event and pinch gesture event are provided to the application executor 174 individually. The pinch gesture event information may include a start point and an end point of the touch gesture.

The touch event collector 171 may also collect the multi-touch event that is not followed, within a predetermined time, by a pinch event. In such a case, the touch event collector 171 informs the control unit 170 of only the multi-touch event collected then, so as to take an action corresponding to the multi-touch event.

If the information on the touch event made for executing an application is received from the touch event collector 171, the application executor 173 executes the corresponding application. The application executor 173 analyzes the touch events to determine the type of the touch events and contact point information. If it is determined that the multi-touch and pinch gesture events are triggered in sequence, then the application executor 173 executes the corresponding application and controls the display panel 143 to display the execution screen of the application. At this time, the application executor 173 may determine the icon map information by referencing the start point of the pinch gesture in the touch even information. The application executor 173 may determine the icon presented closest to the point where the pinch gesture has started.

The application executor 173 executes the application represented by the determined icon. The application executor 173 retrieves an execution screen image of the corresponding application from execution screen DB 163. The application executor 173 controls displaying of the execution screen. Particularly, the application executor 173 may configure the properties of the execution screen image in order to draw the user's attention to the display of the execution screen. For example, the application executor 173 may control outputting of the execution screen to be at a predetermined size so as to be distinguished from the icon. The application executor 173 may also control the display panel 143 so as to display the execution screen at a size proportional to the changing distance between the contact points, according to the pinch gesture event. The application executor 173 also may control the display panel 143 to display the execution screen at a size proportional to the pinch acceleration and/or a predetermined aspect ratio of the screen. The application executor 173 may control displaying of the execution screen at an area corresponding to the end points of the pinch gesture event. Although the description of the present exemplary embodiments is directed to a case where only the size of the execution screen image changes, the execution screen image may change in shape with a visual effect. The application executor 173 may control an arrangement of the display of the icons and/or other execution screens at specific areas of the screen so as to avoid such from being hidden by the activated execution screen.

The application executor 173 also may control adjustment of a size of the execution screen according to the pinch gesture event. Particularly, the application executor 173 may determine the size of the execution screen according to the multi-touch distance and pinch acceleration, as determined from the touch event corresponding to the pinch gesture.

If the user triggers a multi-touch event followed by a pinch gesture event of another icon for multitasking, the application executor 173 may control displaying of another execution screen corresponding to the icon on which the pinch gesture event was generated, as described above. In this way, the application executor 173 is capable of displaying multiple execution screens that are displayed in a certain situation.

Meanwhile, the control unit 170 may control displaying of a preview image of the execution screen before executing the corresponding application. For this purpose, the control unit 170 may include a preview image presenter 175. At this time, if the multi-touch event and the pinch gesture event in response to the multi-touch event are collected, then the touch event collector 171 may send the information on the touch events to the preview image presenter 175 as well as the application executor 173. The application executor 173 may control suspending of the execution of the application, even though such touch event information has been received, until a predetermined application execution condition is fulfilled. The operations of the application executor 173 may be modified with the addition of the preview image presenter 175.

The preview image presenter 175 may control the display panel 143 to display the preview image. The preview image presenter 175 may retrieve an execution screen image of the application corresponding to the icon that is multi-touched and then pinched. The preview image presenter 175 may control the display panel 143 to display the retrieved execution screen image as the preview image to be displayed. At this time, the preview image presenter 175 may control displaying of the preview image with specific features in order to draw the user's attention to the presentation of the captured image, rather than the execution screen, as the preview image. For example, the preview image presenter 175 may add or provide a visual effect to the execution screen image in order to distinguish the preview image from the execution screen. For example, the preview image may be shaded or highlighted, or may have any suitable and/or similar visual effect. The preview image presenter 175 may control displaying of the preview image to be at a predetermined size. The preview image presenter 175 may also control displaying of the preview image to be in proportion to the multi-touch distance. The preview image may be displayed at a size proportional to the pinch acceleration or be displayed at a specific aspect ratio of the screen of the display panel 143. The preview image presenter 175 may control the display panel 143 to display the preview image at a position where the current pinch gesture event is detected. The preview image presenter 175 also may control arrangement of the icons or other preview images or execution screens such that they are displayed at a predetermined area on the screen of the display unit so as not to be out of the user's sight.

The preview image presenter 175 may control the size of the preview image according to the pinch gesture event detected until the application is executed. Particularly, the preview image presenter 175 may determine the size of the preview image according to the multi-touch distance or pinch acceleration of the pinch gesture which is analyzed from the pinch gesture event.

If the user executes the multi-touch event followed by a pinch gesture event for or on another icon for multitasking, then the preview image presenter 175 may control displaying of another image as described above. In this way, the preview image presenter 175 may display multiple preview images simultaneously.

In a case where the preview image presenter 175 is incorporated in the control unit 170, the application executor 173 may execute the application when a predetermined application execution condition is fulfilled. While the preview image is displayed, i.e., while the pinch gesture event is maintained after the multi-touch event, then the application executor 173 determines whether the condition (e.g., a multi-touch distance, a pinch acceleration, a preview image size, and any combination thereof) is fulfilled. The application executor 173 may analyze the information on the contact points of the touch event in order to determine whether the condition is fulfilled. If the application execution condition is fulfilled, then the application executor 173 may execute the application and display the execution screen of the application. At this time, the application executor 173 may notify the user of the presentation of the execution screen without visual effect of the preview image. If it is determined that the application execution condition is not fulfilled, then the application executor 173 suspends executing the application.

After displaying the preview image, the application executor 173 may execute the application in response to an execution command received afterward. Here, the execution command may be the command for executing the corresponding application which is generated in response to a key input made through the key input unit 120 or may be a specific touch event made on the preview image through the touch panel 141. For example, the application executor 173 may execute the application in response to a tap event made on the preview image. If a touch event for use of an application function is made in the execution screen region, the control unit 170 controls execution of the function corresponding to the touch event. The application executor 173 may also be configured to execute the application in response to one of other suitable and similar touch events, with the exception of the tap event.

As described above, if a multi-touch event followed by a pinch gesture event is made on or at an icon on the touch panel 141, then the terminal 100, according to an exemplary embodiment of the present invention, displays the execution screen of the application represented by the icon or the preview image of the execution screen by means of the display panel 143. In this way, the terminal 100 enables the user to determine the application information intuitively. As the pinch gesture continues, the terminal 100 adjusts the size of the execution screen or preview images in association with the pinch gesture, such that multiple execution screens and preview images may be exposed on the screen. Accordingly, the user may view multiple application execution screens in a multitasking mode so as to manage the executed application efficiently. With the efficient management of the applications running in multitasking mode, it is possible to reduce the processing load of the terminal 100.

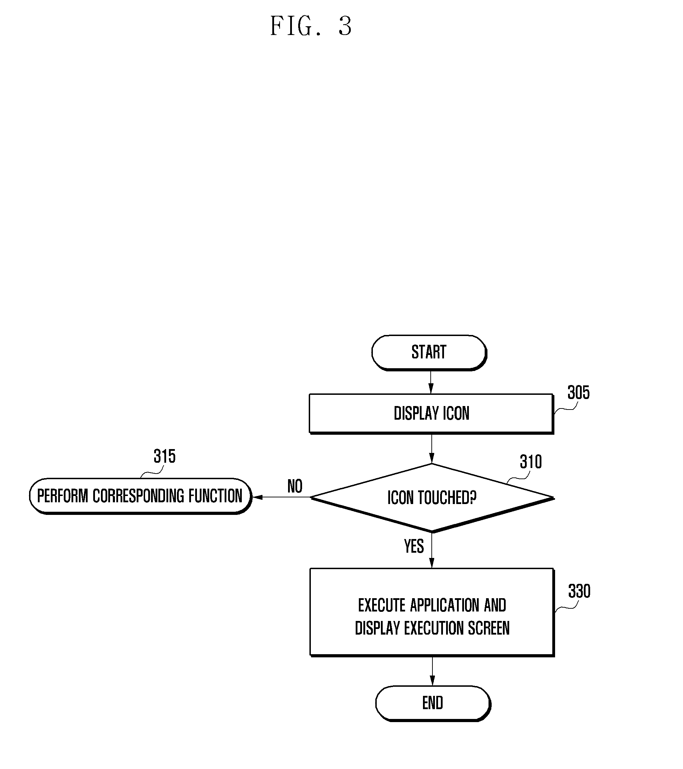

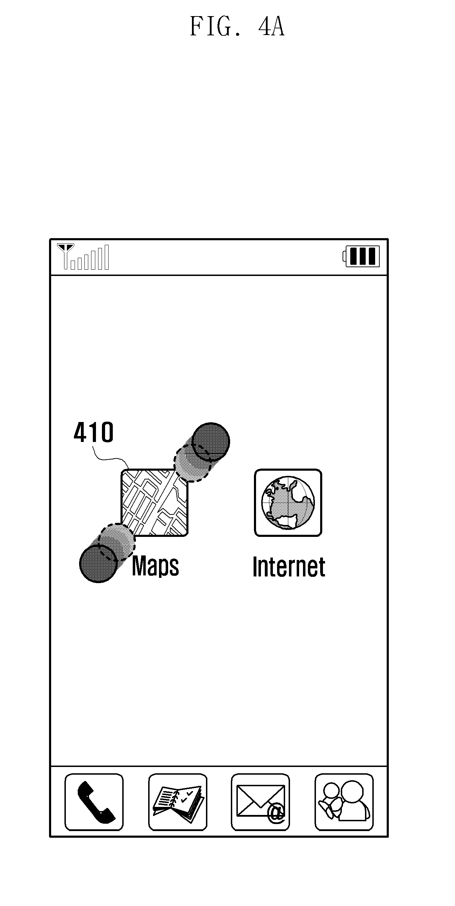

FIG. 3 is a flowchart illustrating an application execution method of a touchscreen-enabled terminal according to an exemplary embodiment of the present invention, and FIGs. 4A to 4D are diagrams illustrating exemplary screen images displayed in an application execution method according to an exemplary embodiment of the present invention.

Referring to FIGs. 3 and 4A to 4D, the control unit 170 controls the display panel 143 to display icons at step 305. The icons are displayed on the idle mode screen. The icons are linked to respective applications such that the user may execute the application by selecting the icon representing the respective application.

Next, the control unit 170 determines whether a touch event occurs on or at an icon at step 310, i.e., the control unit 170 determines whether an icon is touched at step 310. If at least one touch event is detected at a position corresponding to the icon, then the control unit 170 determines that icon is selected and the controller 170 proceeds to step 330. The at least one touch event may be a combination of a multi-touch event having two contact points and a pinch gesture event following the multi-touch event. The control unit 170 may analyze the touch event that is detected via the touch panel 141. The control unit 170 may determine the type of the touch event and the icon selected by the user by referencing the contact point information and icon map. As noted above, if it is determined that a multi-touch event followed by a pinch gesture event are made in sequence on or to a certain icon, then the procedure goes to step 330 in order to execute the application and display the execution screen. Otherwise, if it is determined that a multi-touch event is made, and, within a predetermined time, no pinch gesture event follows the multi-touch event, then the control unit 170 performs a function corresponding to the multi-touch event at step 315.

Referring to FIG. 4A, the user may make a multi-touch with two contact points, as denoted by dotted circles, made at opposite corners of a map application icon 410 (hereinafter, map icon 410) displayed on the idle mode screen using a touch object. The control unit 170 may analyze the information corresponding to the touch event made with the contact of the touch object in order to determine the multi-touch event that pinches the map icon 410, and thus the procedure goes to step 330. Although FIG. 4A is directed to a case where the touch is made within the area presenting the map icon 410, the position corresponding to the map icon 410 is not limited to the area presenting the icon. It is possible to configure the region around position where the icon is presented to be included in the active region of the icon. The multi-touch may continue with the gesture by narrowing or widening the distance between the contact points. The control unit 170 may then receive the information on the movement of the contact points, i.e., pinch gesture event, and analyzes the information. The control unit 170 may determine whether the detected touch event is the pinch gesture event.

If the multi-touch event and pinch gesture event are sequentially made to or on a specific icon, then the control unit 170 executes the application represented by the specific icon and displays the execution screen of the application at step 330. At this time, the control unit 170 references the icon map in order to determine the application represented by the icon to which the sequential multi-touch event and the pinch gesture event are made. The control unit 170 may control execution of the determined application. The control unit 170 may retrieve the image of the execution screen corresponding to the determined application from the execution screen DB 163 and may display the execution screen image at a predetermined size. Here, the retrieved execution screen image may be the image of the screen last displayed at a time at which the application was terminated. The control unit 170 may control restarting of the application with a state corresponding to the last termination time point of the application.

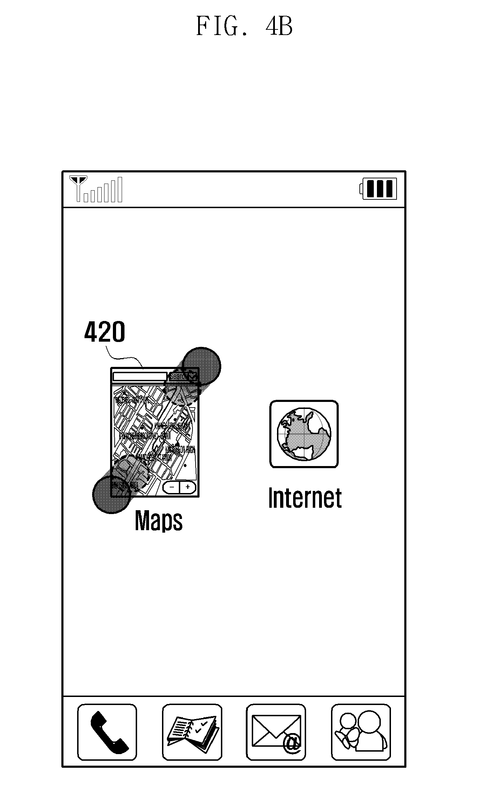

The control unit 170 may control the display of the execution screen according to the application execution function configuration such that the user is aware of the display of the execution screen. Particularly, the control unit 170 may control displaying of the execution screen at a size proportional to a change in the multi-touch distance according to the pinch gesture, as shown in FIG. 4B. Referring to FIG. 4B, a diagonal length of the map application execution screen 420 may be approximately equal to the multi-touch distance. The execution screen may be displayed at size proportional to the pinch acceleration or at an aspect ratio of the screen of the display panel 143. For example, if the pinch gesture is made at an acceleration rate greater than a predetermined value in a widening direction of the contact points, then the execution screen gradually increases in size at a rate proportional to the multi-touch distance and, when the acceleration rate exceeds a predetermined value, the execution screen is displayed at a full screen size. Also, if the pinch gesture is made at an acceleration rate greater than a predetermined value in a narrowing direction of the contact points, then the execution screen gradually decreases in size at a rate proportional to the multi-touch distance and, when the acceleration rate exceeds a predetermined value, the execution screen decreases abruptly so as to become the icon and then disappear. The user may determine the functionality of the application by means of the icon representing the application and, if unnecessary, disable the execution screen of the application. If the multi-touch event and the pinch gesture event in response to the multi-touch event are detected, the control unit 170 may control displaying of the execution screen such that it is displayed at a size corresponding to a predetermined percentage of the size of the display panel 143, e.g., 70% of the screen size of the display panel 143. The execution screen 420 may be displayed on the display panel 143 at a predetermined size, as shown in FIG. 4B. The control unit 170 may also control display of the execution screen to be at an area corresponding to the contact points where the pinch gesture is finished.

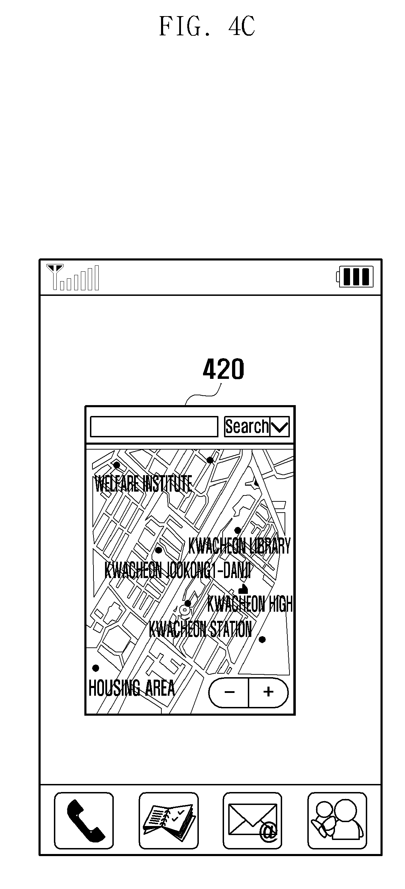

The user may input commands for all available functions supported by the map application, such as navigation, zoom-in, zoom-out functions, and any other similar or suitable functions, through the execution screen, which may be the map application execution screen 420, as shown in FIG. 4C. Since the execution screen is controlled with touch gestures, the user can determine the functionality of the application intuitively.

The control unit 170 may control automatic rearrangement of the icons and/or other executions screens so that they are not to be hidden by the currently selected execution screen at step 330. In a case where the icons are displayed on the screen, the icons may be rearranged according to a predetermined pattern on the idle mode screen. For example, the icons may be rearranged in the blank space while maintaining their rearranged order for user's convenience. Furthermore, the other execution screens may be rearranged so as to be not overlaid by the currently selected execution screen. At this time, the control unit 170 may divide the screen of the display panel 143 into a plurality of sections regular at a size such that the execution screens are presented in the corresponding sections. For example, if there are two execution screens to be displayed, then the control unit170 controls the display panel 143 so as to divide the screen horizontally into two half sections or vertically, such that the two execution screens are presented in the respective sections.

The control unit 170 controls the execution screen to be displayed at a size varying according to the pinch gesture event, at step 330, and controls the application execution procedure up to the end of the application execution procedure. Such an application execution procedure with an animated screen display allows the user to enjoy various functions.

In the application execution procedure, according to an exemplary embodiment of the present invention, the control unit 170 may further process the touch event for changing the execution screen properties even after the presentation of the execution screen. For example, if a pinch gesture event is detected at an edge of the execution screen, then the control unit 170 may control the display panel 143 to adjust the size of the execution screen in a manner proportional to at least one of the multi-touch distance, the pinch acceleration and the aspect ratio of the screen of the display panel 143. If a pinch gesture is made, such that the multi-touch distance is abruptly narrowed above a particular velocity or the multi-touch distance becomes less than a predetermined distance, then the control unit 170 controls the size of the execution screen such that it decreases and then disappears with the termination of the application.

If a tab event is detected at a region of the execution screen where no function is mapped, then the control unit 170 may control displaying of the execution screen in a full screen mode on the display panel 143. If a drag event is detected at a region of the execution screen where no function is mapped, then the control unit 170 may control moving of the execution screen on the display panel 143 along the drag path. If the screen image is dragged onto a trash can icon, then the control unit 170 may control the execution screen such that it disappears with the termination of the application.

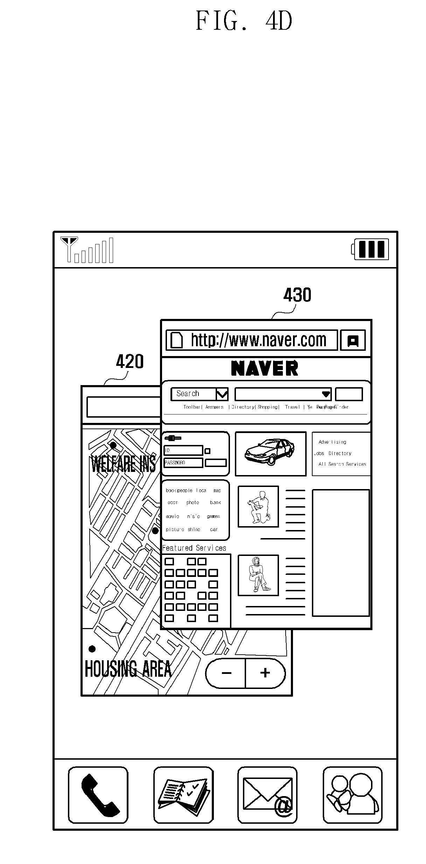

The terminal 100, according to an exemplary embodiment of the present invention, may execute multiple applications in the multitasking mode. For example, after executing the map application, the user may want to search for information on a certain location. In this case, if the user makes a multi-touch and pinch gesture on or at an Internet browser icon, the terminal 100 displays a web browser execution screen 430 along with the map application execution screen 420, as shown in FIG. 4D. The terminal 100 may be configured such that multiple application execution screens are arranged so as to be partially overlapped with each other while displayed on the screen in the multitasking mode. Since a plurality application execution screens are simultaneously displayed on the screen, the user can view the execution screens conveniently. The user may determine the currently running applications intuitively. As a consequence, the user may efficiently control the applications running in the multitasking mode. Also, the user may easily determine and terminate the applications running unnecessarily. Accordingly, it is possible to reduce the unnecessary processing load of the terminal 100.

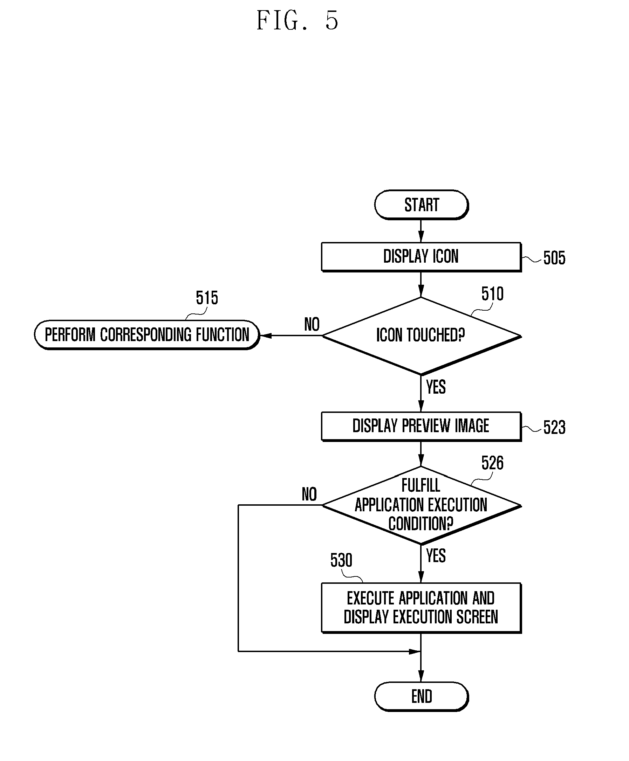

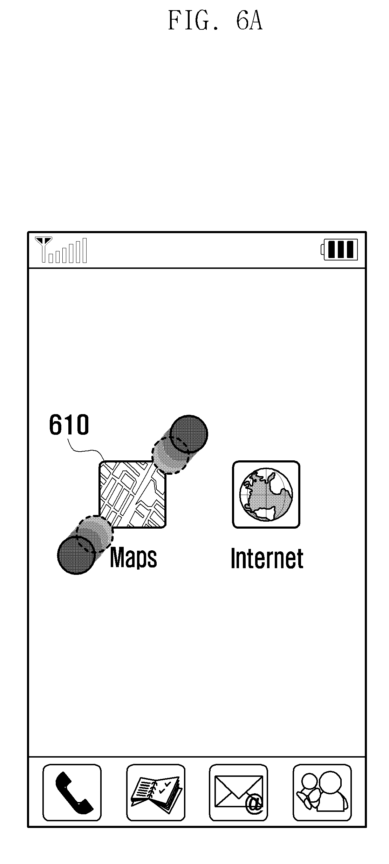

FIG. 5 is a flowchart illustrating an application execution method of a touchscreen-enabled terminal according to an exemplary embodiment of the present invention. FIGs. 6A to 6E are diagrams illustrating exemplary screen images displayed in an application execution method according to an exemplary embodiment of the present invention.

Referring to FIGs. 5 and 6A to 6E, in this exemplary embodiment, the terminal 100 displays a preview image before executing an application in order for the user to acquire and or view the information on the application quickly. Accordingly, it is not necessary to execute the application for merely determining the functionality of the corresponding application, because the information on the application represented by the icon is pre-provided to the user. Since the user may determine the functionality of an application, it is possible to reduce unnecessary execution of the application, resulting in reduction of the terminal processing load.

Referring to FIG. 5, the icon display step 505, the touch detection step 510, and the touch event-based function execution step 515 of FIG. 5 are respectively similar to steps 305, 310, and 315 of FIG. 3, and, thus, detailed descriptions thereof are omitted with reference to FIG. 5.

If multi-touch and pinch gestures on or at an icon 610 are detected in sequence at step 510, then the procedure goes to step 523. At step 523, the control unit 170 controls the display panel 143 to display a preview image. The control unit 170 may control displaying of the preview image such that it is displayed in a manner similar to that of step 330 of FIG. 3. The control unit 170 may emphasize the preview image by adding a visual effect to the execution screen image retrieved from the execution screen DB 163. The control unit 170 also may emphasize that the current image is the preview image 615 and is not the real time execution screen image by adding various visual effects such as shading and highlight effects to distinguish the preview image 615 from the real time execution screen. The control unit 170 may also control the preview image size determination step in a manner similar to step 330 of FIG. 3. That is, the control unit 170 may control displaying of the preview image such that it is displayed so as to be distinguishable from other images. Particularly, the control unit 170 may control displaying of the preview image such that it is displayed at a size proportional to the multi-touch distance.

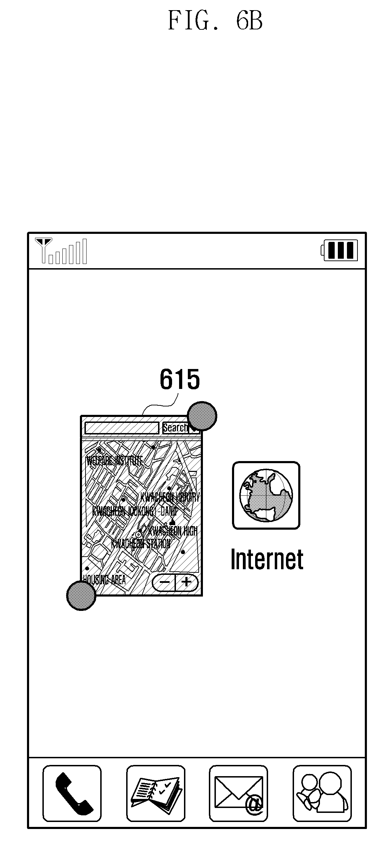

The control unit 170 may also control the display panel 143 to display the preview image at size proportional to the pinch acceleration or aspect ratio of the display panel 143. The control unit 170 may also control displaying of the preview image such that it is displayed at a position where the pinch gesture ends. For example, the display panel 143 may display the preview image 615 of the map application with the shading effect at a size proportional to the multi-touch distance of the pinch gesture under the control of the control unit 170, as shown in FIG. 6B. The control unit 170 may control rearrangement of the icons, other preview images, and/or execution screens so that they are rearranged so as to avoid being hidden by the activated preview image at step 523. Furthermore, the control unit 170 may notify the user of the presentation of the preview image with a popup window at step 523. The control unit 170 may also control displaying of the popup window such that it is presented with preview image and execution screen view options that may be selected by the user. The control unit 170 may also control displaying of the popup window such that it is presented when the multi-touch distance of the pinch gesture is equal to or greater than a predetermined distance. In this manner, the present exemplary embodiment provides the user with intuitive and user-intended application information.

Once the preview image is displayed at step 523, then the control unit 170, at step 526, determines whether an application execution condition is fulfilled. For example, the application execution condition may be fulfilled when at least one of the multi-touch distance, the pinch acceleration, the preview image size, or any other suitable and/or similar condition, and any combination thereof, satisfies a predetermined threshold value. Here, the control unit 170 may determine whether the application execution condition is fulfilled, based on information on the points of the pinch gesture event. If it is determined that the application execution condition is not fulfilled, then the control unit 170 ends the application execution procedure. In this case, the display panel 143 displays the preview image without execution of the corresponding application. Since the preview image is displayed before executing the application, the application execution method of the present exemplary embodiments may provide the user with the intuitive application information without significantly increasing the processing load of the terminal 100.

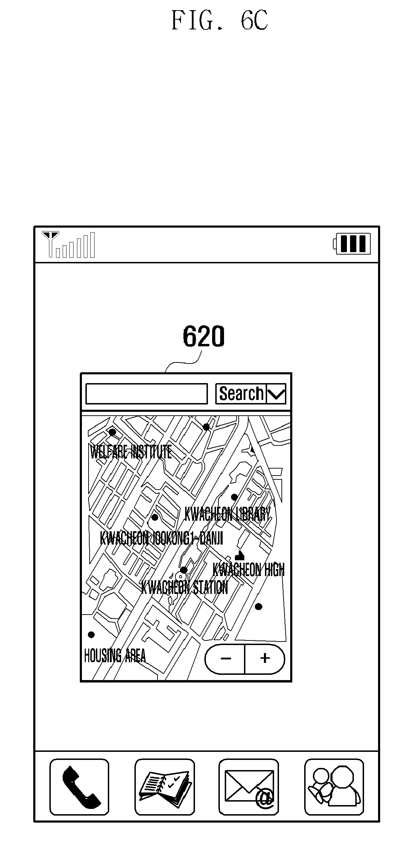

If it is determined that the application execution condition is fulfilled at step 526, then the procedure goes to step 530. At step 530, the control unit 170 controls execution of the application such that it is executed with the presentation of the execution screen 620, as shown in FIG. 6C.

The size of application execution screen may correspond to the multi-touch distance. In this case, the control unit 170 determines whether the multi-touch distance of the pinch gesture is greater than a threshold value at step 526. If it is determined that the multi-touch distance of the pinch gesture is greater than the threshold value, then the control unit executes the application and displays the execution screen of the application at step 530. At this time, the control unit 170 may control the operation of the terminal 100 in a manner similar to that of step 330 of FIG. 3. The control unit 170 may inform the user of the display of execution screen 620 by removing the visual effect used when displaying the preview image. Once the execution screen is displayed, the control unit 170 ends the application execution procedure.

In this exemplary embodiment, the control unit 170 may process further and/or additional touch events executed for changing the properties of the preview image and/or the execution screen after release of the multi-touch executed at or on the preview image/execution screen. As described with reference to the exemplary embodiment of FIG. 3, the size of the preview image/execution screen may be adjusted or may be made to disappear. In contrast, in the exemplary embodiment of FIG. 5, if a tap event is detected on the preview image, the control unit 170 may control the displaying of the execution screen. At this time, the control unit 170 may inform the user of the displaying of execution screen by removing the visual effect used when displaying the preview image.

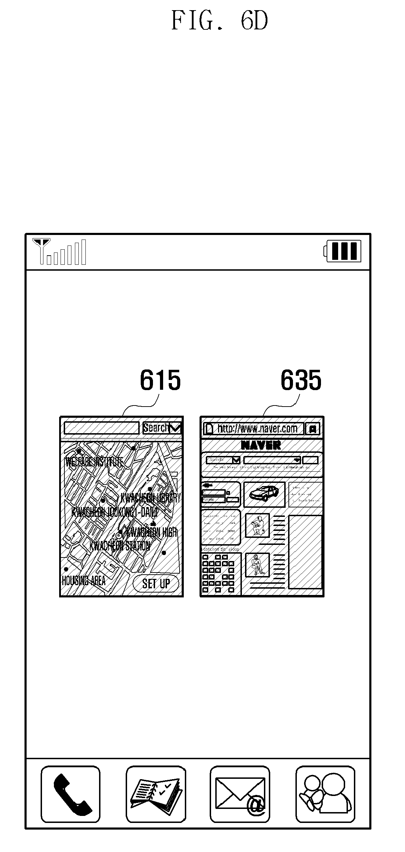

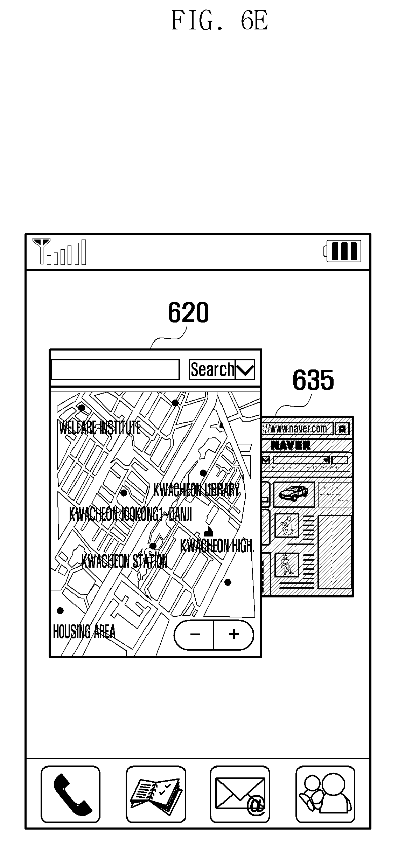

In the present exemplary embodiment, the application execution procedure may be repeated. Accordingly, the user may make the multi-touch and pinch gestures to a plurality of icons in sequence such that the control unit 170 controls displaying of a plurality of preview image 615 and 635, as shown in FIG. 6D. The user may input an execution command targeting one of the multiple preview images for executing the application represented by the target preview image. At this time, the user may input the execution command via the key input unit 120 or the touch panel 141. If the user makes a tap on one of the preview images 615 and 635, for example, the map application preview image 615, then the control unit 170 controls execution of the map application and displays the execution screen 620 of the map application as shown in FIG. 6E. The execution screen may be adjusted in size and displayed in a full screen view of the display panel 143.

Although FIG. 6E is directed to the case where the map application execution screen 620 and the web browser preview image 539 are overlapped, the control unit may control a rearrangement of at least one of the two objects so as not to be overlapped with each other.

As described above, the application execution method and terminal of the exemplary embodiments of the present invention are capable of facilitating utilization of various functions of the terminal using the touchscreen of the terminal. Also, the application execution method and terminal of the exemplary embodiments of the present invention are capable of detecting sequentially occurring multi-touch and pinch gestures made on the touchscreen by a user and may provide the user with the preview image or execution screen of the applications corresponding to the gestures in order for the user to intuitively determine the functionalities of the applications. Also, the application execution method and touchscreen-enabled terminal of the exemplary embodiments of the present invention are capable of displaying multiple preview images and/or execution screens corresponding to the application running in a multitasking mode, whereby the user may manage the applications more efficiently. Furthermore, the application execution method and touchscreen-enabled terminal of the exemplary embodiments of the present invention provides the user with a preview image of the execution screen of a target application such that the user is aware of the functionality of the application without execution of the application, resulting in reduction of the processing load of the terminal.

As described above, the touchscreen-enabled application execution method and terminal of the exemplary embodiments of the present invention are capable of detecting multi-touch and pinch gestures made on or at an icon on the touchscreen and are capable of dynamically executing an application and displaying an application execution screen according to the gesture. The touchscreen-enable application execution method and terminal of the exemplary embodiments of the present invention may intuitively provide the user with the application information. The touchscreen-enabled application execution method and terminal of the exemplary embodiments of the present invention provides the user with a preview image before executing the application selected by the user in order for the user to view the functionality of the application. Accordingly, the user can view and/or determine the functionality of the application without waiting for the execution of the application.

The touchscreen-enabled application execution method and terminal of the exemplary embodiments of present invention are capable of adjusting a size of an application execution screen so as to be proportional to the multi-touch distance in order for the user to simultaneously see the execution screens of the applications that are simultaneously running. Accordingly, the user can determine the applications that are currently running in a multitasking mode, switch among the applications, determine the functionalities of the application quickly, and terminate any unnecessary applications, resulting in improvement of application management in the multitasking mode.

The touchscreen-enabled application execution method and terminal of the exemplary embodiments of the present invention are capable of reducing the processing load of the terminal as well as improving the user convenience. The touchscreen-enabled application execution method and terminal of the exemplary embodiments of the present invention may provide the user with a preview image of the execution screen of an application before executing the application selected by the user such that the user can view and/or determine the functionality of the application without execution of the application, thus, resulting in a reduction of the processing load. The touchscreen-enabled application execution method and terminal of the exemplary embodiments of the present invention enables the user to manage the applications running in the multitasking mode so as to reduce the processing load of the terminal. Accordingly, the touchscreen-enabled application execution method and terminal of the exemplary embodiments of the present invention may reduce the load of the terminal and facilitate managing diverse functions of the terminal.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A method comprising:
displaying an icon corresponding to an application;
detecting a multi-touch event at at least two separate positions of the icon; and
when a pinch gesture event is detected in response to the multi-touch event:
- adjusting a size of a preview image of the application corresponding to the icon and displaying the size-adjusted preview image, or
- adjusting a size of an execution screen of the application corresponding to the icon, displaying the size-adjusted execution screen.

2. The application execution method of claim 1, comprising said when a pinch gesture event is detected in response to the multi-touch event, adjusting a size of an execution screen of the application corresponding to the icon, displaying the size-adjusted execution screen, and executing the corresponding application.

3. The method of claim 1, the method further comprising:
when the multi-touch event and/or the pinch gesture event is detected, executing the application.

4. The method of claim 3, wherein the adjusting the size of the execution screen comprises adjusting the size of the execution screen in accordance with at least one of a multi-touch distance of the pinch gesture event and a predetermined size of the execution screen.

5. The method of claim 3, wherein the adjusting the size of the execution screen comprises adjusting the size of the execution screen in accordance with a pinch acceleration of the pinch gesture event.

6. The method of claim 3, wherein the displaying of the size-adjusted execution screen comprises rearranging at least one of other icons and execution screens to a blank space where the size-adjusted execution screen is not displayed.

7. The method of claim 3, the method further comprising:
terminating, when the execution screen is dragged to a particular icon, the application.

8. The method of claim 7, wherein the particular icon is a trash can icon.

9. The method of claim 3, the method further comprising:
terminating, when a multi-touch distance of the pinch gesture event is abruptly narrowed below a particular velocity or narrowed below a particular distance, the application.

10. The method of claim 1, the method further comprising said when a pinch gesture event is detected in response to the multi-touch event, adjusting the size of the preview image of the application corresponding to the icon and displaying the size-adjusted preview image.

11. The method of claim 10, the method further comprising when the size of the preview image is greater than a predetermined size, executing the application and displaying an execution screen of the application.

12. The method of claim 10, wherein the adjusting the size of the preview image comprises adjusting the size of the preview image according to at least one of a multi-touch distance of the pinch gesture event and a predetermined size of the preview image.

13. The method of claim 11, wherein the displaying of the execution screen comprises adjusting a size of the execution screen according to at least one of a multi-touch distance of the pinch gesture event and a predetermined size of the execution screen.

14. The method of claim 10, wherein the displaying of the preview image comprises adjusting a size of the preview image according to a pinch acceleration of the pinch gesture event.

15. The method of claim 11, wherein the displaying of the execution screen comprises adjusting a size of the execution screen according to a pinch acceleration of the pinch gesture event.

16. The method of claim 10, wherein the displaying of the preview image comprises rearranging at least one of other icons, execution screens, and preview images to a blank space where the size-adjusted preview image is not displayed.

17. The method of claim 11, wherein the displaying of the execution screen comprises rearranging at least one of other icons, execution screens, and preview images to a blank space where at least one of the size-adjusted preview image and the execution screen is not displayed.

18. The method of claim 11, the method further comprising:
terminating, when the execution screen is dragged to a particular icon, the application.

19. The method of claim 18, wherein the particular icon is a trash can icon.

20. The method of claim 11, the method further comprising:
terminating, when a multi-touch distance of the pinch gesture event is abruptly narrowed below a particular velocity or narrowed below a particular distance, the application.

21. A terminal comprising:
a display panel for displaying an icon corresponding to an application;
a touch panel for generating a multi-touch event and/or a pinch gesture event detected at at least two separate positions of the icon; and
a control unit for, when the multi-touch event and/or the pinch gesture event in response to the multi-touch event are detected at the touch panel:
- adjusting a size of a preview image of the application corresponding to the icon and controlling the display panel to display the size-adjusted preview image, or
- adjusting a size of an execution screen of the application corresponding to the icon and controlling the display panel to display the size-adjusted execution screen.

22. The terminal of claim 21, wherein the control unit is arranged for executing, when the multi-touch event and/or the pinch gesture event in response to the multi-touch event is detected at the touch panel, the application.

23. The terminal of claim 22, wherein the control unit is arranged for controlling the display unit, when the multi-touch event and/or the pinch gesture event in response to the multi-touch event are detected at the touch panel, to display the preview image of the corresponding application before displaying the execution screen.

24. The terminal of claim 23, wherein the control unit is arranged for, performing the adjusting the size of the execution screen or the preview image according to at least one of a multi-touch distance of the pinch gesture event and a predetermined size.

25. The terminal of claim 23, wherein the control unit is arranged for performing the adjusting the size of the execution screen or the preview image according to a pinch acceleration of the pinch gesture event.

26. The terminal of claim 23, wherein the control unit is arranged for executing, when the display unit displays the preview image and a size of the preview image is greater than a predetermined size, the application and for controlling the display unit to display the execution screen of the application.

27. The terminal of claim 23, wherein the preview image has a visual effect added so that the preview image is different from the execution screen.

28. The terminal of claim 23, wherein the control unit is arranged for controlling, when the display unit displays one of the preview image and the execution screen, the display unit to display at least one of other icons, execution screens, and preview images rearranged to a blank space where the one of the preview image and the execution screen is not displayed.

29. The terminal of claim 22, wherein the control unit is arranged for terminating, when the execution screen is dragged to a particular icon, the application.

30. The terminal of claim 29, wherein the particular icon is a trash can icon.

31. The terminal of claim 22, wherein the control unit is arranged for terminating, when a multi-touch distance of the pinch gesture event is abruptly narrowed above a particular velocity or narrowed below a particular distance, the application.
